# EUROPÄISCHE PATENTSCHRIFT

(11) **EP 3 283 326 B1**
(45) Veröffentlichungstag und Bekanntmachung des Hinweises auf die Patenterteilung: **06.05.2020**
(21) Anmeldenummer: 16715305.5
(22) Anmeldetag: 08.04.2016
(51) Int. Cl.: B64D 11/00, B60N 3/00, B64D 11/06

(54) **FLUGZEUGSITZVORRICHTUNG**
AIRCRAFT SEAT DEVICE
DISPOSITIF FORMANT SIÈGE D'AVION

(30) Priorität: 13.04.2015 DE 102015105618
(43) Veröffentlichungstag der Anmeldung: 21.02.2018
(73) Patentinhaber: Recaro Aircraft Seating GmbH & Co. KG, 74523 Schwäbisch Hall (DE)
(72) Erfinder: JUSSLI, Zoltan, 74182 Obersulm (DE); ERB, Andreas, 74523 Schwäbisch Hall (DE)
(74) Vertreter: Daub, Thomas
(86) Internationale Anmeldenummer: PCT/EP2016/057758
(87) Internationale Veröffentlichungsnummer: WO 2016/166027

(56) Entgegenhaltungen:
- EP-A2- 2 799 338
- WO-A1-2013/166067
- WO-A1-2015/013661
- DE-U1-202012 105 089
- JP-A- 2013 107 572
- US-A1- 2012 206 867
- US-A1- 2014 373 758

## Beschreibung

### Stand der Technik

Die Erfindung betrifft eine Flugzeugsitzvorrichtung nach dem Oberbegriff des Patentanspruchs 1.

Es sind bereits Flugzeugsitzvorrichtungen mit einem Tischmodul und mit einem PED-Halter, der dazu vorgesehen ist, ein PED in einer Bedienposition auf dem Tischmodul zu lagern, wobei der PED-Halter wenigstens ein Halteelement aufweist, das schwenkbar mit dem Tischmodul verbunden ist, vorgeschlagen worden.

Die Dokumente EP 2799338 A2 und WO 2013/166067 A1 zeigen solche Vorrichtungen.

Die Aufgabe der Erfindung besteht insbesondere darin, eine gattungsgemäße Vorrichtung mit verbesserten Eigenschaften hinsichtlich Vielseitigkeit und Komfort bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einem Tischmodul und mit einem PED-Halter, der dazu vorgesehen ist, ein PED in einer Bedienposition auf dem Tischmodul zu lagern, wobei der PED-Halter wenigstens ein Halteelement aufweist, das schwenkbar mit dem Tischmodul verbunden ist.

Es wird vorgeschlagen, dass der PED-Halter eine Schwenklagereinheit umfasst, die dazu vorgesehen ist, das Halteelement um mehr als 180 Grad zu verschwenken. Unter einem "Tischmodul" soll dabei insbesondere ein Modul verstanden werden, das dazu vorgesehen ist, wenigstens in einem Betriebszustand wenigstens eine Tischoberfläche bereitzustellen, auf der Elemente abgelegt werden können. Ein Tischmodul ist dabei als Teil einer Flugzeugsitzvorrichtung ausgebildet, die wenigstens einen Flugzeugsitz aufweist, wobei das Tischmodul dazu vorgesehen ist, die wenigstens eine Tischoberfläche für einen Passagier bereitzustellen, der auf dem Flugzeugsitz sitzt, dem das Tischmodul zugeordnet ist. Unter einem "PED-Halter" soll dabei insbesondere eine Einheit verstanden werden, die dazu vorgesehen ist, wenigstens eine Aufnahme für ein PED bereitzustellen, sodass das PED sicher auf dem Halter gelagert werden kann. Unter einem "PED" soll dabei insbesondere ein mobiles elektronisches Gerät, wie insbesondere ein Tablet-PC, ein Smartphone, ein E-Book-Reader oder ein anderes, dem Fachmann als sinnvoll erscheinendes mobiles elektronisches Gerät, verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Bedienposition" soll dabei insbesondere eine Position verstanden werden, in der das PED mittels des PED-Halters gelagert werden kann, sodass das PED von einem auf dem entsprechenden Flugzeugsitz sitzenden Passagier bedient werden kann. Darunter, dass das "Halteelement schwenkbar mit dem Tischmodul verbunden ist", soll dabei insbesondere verstanden werden, dass das Halteelement um eine Schwenkachse, drehbar zu dem Tischmodul gelagert ist und um diese Schwenkachse zu dem Tischmodul gedreht werden kann. Dabei ist das Halteelement vorzugsweise in verschiedenen Stellungen, also in verschiedenen Winkelstellungen zu dem Tischmodul, fixierbar. Dabei kann eine Fixierung des Halteelements durch einen Kraft- und/oder Formschluss erreicht werden. Dabei ist es denkbar, dass die Fixierung durch einen Reibschluss, beispielsweise durch beabstandet angeordnete Reibelemente, erreicht wird oder durch einen Formschluss, wie beispielsweise durch beabstandet zueinander angeordnete Rastelemente. Durch eine erfindungsgemäße Ausgestaltung kann ein besonders vielseitiger und in unterschiedlichen Betriebszuständen des Tischmoduls verwendbarer PED-Halter bereitgestellt werden und so ein Komfort für einen Passagier erhöht werden.

Es wird weiter vorgeschlagen, dass das Halteelement dazu vorgesehen ist, ausgehend von einer Verstaustellung um weniger als 180 Grad in eine erste Haltestellung verschwenkt zu werden. Unter einer "Verstaustellung" soll dabei insbesondere eine Stellung des Halteelements verstanden werden, in der das Halteelement besonders platzsparend an einer Struktur, an der das Halteelement angebunden ist, also an dem Tischmodul, angeordnet ist und der PED-Halter dabei nicht zum Halten eines PEDs genutzt werden kann. Dabei ist das Halteelement in der Verstaustellung vorzugsweise in einer dafür vorgesehenen Ausnehmung angeordnet. Dadurch kann eine erste Haltestellung besonders vorteilhaft ausgebildet werden.

Zudem wird vorgeschlagen, dass das Halteelement dazu vorgesehen ist, ausgehend von einer Verstaustellung um mehr als 180 Grad in eine zweite Haltestellung verschwenkt zu werden. Dadurch kann der PED-Halter besonders variabel ausgebildet werden.

Weiter wird vorgeschlagen, dass das Tischmodul zumindest ein erstes Tischelement und wenigstens ein schwenkbar zu dem ersten Tischelement gelagertes, zweites Tischelement aufweist, wobei in einem ersten Betriebszustand das erste Tischelement allein eine erste Tischoberfläche ausbildet und in einem zweiten Betriebszustand die beiden Tischelemente zusammen eine zweite Tischoberfläche ausbilden. Unter einem "Tischelement" soll dabei insbesondere ein Element verstanden werden, das das Tischmodul wenigstens teilweise ausbildet. Dabei weist das Tischmodul mehrere Tischelemente auf, die allein oder zusammen eine Tischoberfläche ausbilden, wobei die Tischelemente des Tischmoduls zueinander beweglich ausgebildet sind, um so in verschiedenen Betriebszuständen allein oder zusammen eine Tischoberfläche bereitzustellen, um für den Passagier so je nach Bedarf eine unterschiedlich große Tischoberfläche bereitzustellen. Unter einem "ersten Betriebszustand" soll dabei insbesondere ein Zustand des Tischmoduls verstanden werden, in dem lediglich das eine Tischelement eine Tischoberfläche bereitstellt, wobei das zweite Tischelement so zu dem ersten Tischelement angeordnet ist, dass das erste Tischelement das zweite Tischelement überdeckt. Grundsätzlich wäre es auch denkbar, dass in dem ersten Betriebszustand des Tischmoduls lediglich das erste Tischelement in eine Gebrauchsstellung gebracht ist, während das zweite Tischelement noch in einer Verstaustellung verstaut ist. Unter einem "zweiten Betriebszustand" soll dabei insbesondere ein Zustand des Tischmoduls verstanden werden, in dem das erste Tischelement zusammen mit dem zweiten Tischelement die Tischoberfläche bereitstellt. Die gesamte Tischoberfläche ergibt sich dabei aus der Tischoberfläche des ersten Tischelements und der Tischoberfläche des zweiten Tischelements, die parallel nebeneinander angeordnet sind. Dadurch kann das Tischmodul besonders flexibel ausgebildet werden.

Zudem wird vorgeschlagen, dass das Halteelement in zumindest einer ersten Haltestellung dazu vorgesehen ist, in dem ersten Betriebszustand des Tischmoduls eine Halterung für ein PED bereitzustellen und in zumindest einer zweiten Haltestellung in dem zweiten Betriebszustand des Tischmoduls eine Halterung für ein PED bereitzustellen. Dadurch kann der PED-Halter vorteilhaft in beiden Betriebsstellungen des Tischmoduls zur Halterung eines PEDs genutzt werden.

Weiterhin wird vorgeschlagen, dass die Schwenklagereinheit eine Schwenkachse ausbildet, die in Querrichtung ausgerichtet ist, die orthogonal auf einer Sitzrichtung eines zugeordneten Flugzeugsitzes verläuft. Unter "in Querrichtung ausgerichtet" soll dabei insbesondere verstanden werden, dass die Schwenkachse parallel zu der Querrichtung ausgebildet ist. Die Querrichtung ist dabei als eine Richtung ausgebildet, die von einer Seite des Flugzeugsitzes zu einer gegenüberliegenden Seite des Flugzeugsitzes ausgerichtet ist und orthogonal zu einer Sitzrichtung des Flugzeugsitzes verläuft. Unter einer "Sitzrichtung" soll in diesem Zusammenhang insbesondere eine Richtung verstanden werden, die bei einer senkrecht zu einem Kabinenboden stehenden Rückenlehne des Flugzeugsitzes durch eine senkrecht von einer Hauptabstützfläche der Rückenlehne ausgehende Achse vorgegeben ist. Die Sitzrichtung gibt dabei in etwa die Richtung an, in die ein auf dem Flugzeugsitz sitzender Passagier sitzt. Dadurch kann die Schwenklagereinheit zur Lagerung des Halteelements des PED-Halters besonders vorteilhaft ausgebildet werden.

Es wird weiter vorgeschlagen, dass das erste Tischelement ein hinteres Ende aufweist, an dem die Schwenklagereinheit angebracht ist. Unter einem "hinteren Ende des Tischelements" soll dabei insbesondere ein Ende des Tischelements verstanden werden, das einem Flugzeugsitz, dem das Tischmodul zugeordnet ist, abgewandt ist. Dadurch kann das Halteelement des Tischmoduls besonders vorteilhaft an dem Tischmodul angebracht werden.

Ferner wird vorgeschlagen, dass die Schwenklagereinheit einen Rastmechanismus aufweist, der dazu vorgesehen ist, das Halteelement in verschiedenen Stellungen zu arretieren. Unter einem "Rastmechanismus" soll dabei insbesondere ein Mechanismus verstanden werden, der mehrere Raststellungen aufweist, in denen der Rastmechanismus fixiert werden kann. Dabei weist der Rastmechanismus vorzugsweise zumindest zwei zueinander bewegliche Elemente auf, die jeweils mehrere, zueinander korrespondierend ausgebildete Rastelemente aufweisen, die in den unterschiedlichen Stellungen für eine formschlüssige Verbindung miteinander vorgesehen sind. Grundsätzlich ist es auch denkbar, dass die beiden zueinander beweglichen Elemente jeweils mehrere, zueinander korrespondierend ausgebildete Reibelemente und/oder andere Kraft- und/oder Formschlusselemente aufweisen. Dadurch kann das Halteelement mittels der Schwenkeinheit besonders einfach in verschiedenen Stellungen fixiert werden.

Weiterhin wird vorgeschlagen, dass das erste Tischelement eine Vertiefung ausbildet, in der das Halteelement des PED-Halters in einer Verstaustellung angeordnet ist. Unter einer "Vertiefung" soll dabei insbesondere eine Ausnehmung verstanden werden, die zumindest die Kontur des Halteelements des PED-Halters aufweist, sodass das Halteelement vorzugsweise vollständig in der Ausnehmung angeordnet werden kann. Dadurch kann das Halteelement des PED-Halters, wenn es nicht gebraucht wird, vorteilhaft in dem Tischmodul versenkt werden.

Es wird weiter vorgeschlagen, dass die Vertiefung in eine erste Seite des ersten Tischelements eingebracht ist. Unter einer "ersten Seite des ersten Tischelements" soll dabei insbesondere eine Seite des ersten Tischelements verstanden werden, die in dem ersten Betriebszustand des Tischmoduls nach oben gerichtet ist und die erste Tischoberfläche ausbildet. Dadurch kann der PED-Halter besonders vorteilhaft ausgebildet werden.

Zudem wird vorgeschlagen, dass die Vertiefung einen Anschlag ausbildet, der in der zumindest einen ersten Haltestellung dazu vorgesehen ist, eine Abstützfläche für das PED bereitzustellen. Unter einer "Abstützfläche" soll dabei insbesondere eine Fläche verstanden werden, die dazu vorgesehen ist, dass sich das PED, insbesondere mit einem unteren Ende, daran abstützen kann. Dabei weist die Abstützfläche vorzugsweise eine Beschichtung auf, die vorzugsweise dazu vorgesehen ist, einen Reibwert der Abstützfläche zu erhöhen, um eine sichere Lagerung des PEDs auf der Abstützfläche zu gewährleisten. Dadurch kann besonders einfach eine Abstützung für ein in dem PED-Halter angebrachtes PED bereitgestellt werden.

Weiter wird vorgeschlagen, dass der PED-Halter wenigstens ein Abstützelement aufweist, das zumindest in einer zweiten Haltestellung dazu vorgesehen ist, eine Abstützfläche für das PED bereitzustellen, und dazu auf der zweiten Seite des ersten Tischelements angeordnet ist. Unter einem "Abstützelement" soll dabei insbesondere ein Element verstanden werden, das durch seine Form eine Fläche bereitstellt, die als eine Abstützfläche für ein PED ausgebildet ist, wobei das Abstützelement dabei als eine Erhöhung oder eine Vertiefung, wie beispielsweise eine Kerbe, ausgebildet sein kann. Grundsätzlich ist es auch denkbar, dass der PED-Halter ein Sicherungselement aufweist, mittels dessen das PED in dem PED-Halter gesichert werden kann, wie beispielsweise ein Gummiband oder anders ausgebildete Halteelemente, die an den PED anbindbar sind. Dadurch kann für den zweiten Betriebszustand des Tischmoduls vorteilhaft eine Abstützfläche für das PED bereitgestellt werden, wodurch das PED in der zweiten Haltestellung besonders vorteilhaft und sicher in dem PED-Halter platziert werden kann.

Zudem wird vorgeschlagen, dass das erste Tischelement in dem ersten Betriebszustand auf dem zweiten Tischelement angeordnet ist und mit einer ersten Seite die Tischoberfläche ausbildet. Dadurch kann das Tischmodul in dem ersten Betriebszustand besonders vorteilhaft kompakt und platzsparend ausgebildet werden.

Weiterhin wird vorgeschlagen, dass das erste Tischelement in dem zweiten Betriebszustand neben das zweite Tischelement geklappt ist und mit seiner zweiten Seite zusammen mit einer ersten Seite des zweiten Tischelements die zweite Tischoberfläche ausbildet. Dadurch kann das Tischmodul mittels der beiden Tischelemente eine besonders vorteilhaft große Tischoberfläche bereitstellen.

Ferner wird vorgeschlagen, dass das Tischmodul lediglich ein Tischelement aufweist, welches ein hinteres Ende umfasst, an dem die Schwenklagereinheit angebracht ist. Dadurch kann der PED-Halter besonders vorteilhaft ausgebildet werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer erfindungsgemäßen Flugzeugsitzvorrichtung in einem ersten Ausführungsbeispiel mit einem Tischmodul und einem PED-Halter,
- Fig. 2: eine schematische Ansicht des Tischmoduls in einem ersten Betriebszustand mit einem Halteelement des PED-Halters in einer Verstaustellung,
- Fig. 3: eine schematische Darstellung des Tischmoduls in dem ersten Betriebszustand mit dem Halteelement des PED-Halters in einer ersten Haltestellung,
- Fig. 4: eine schematische Darstellung des Tischmoduls in dem ersten Betriebszustand mit dem Halteelement des PED-Halters in einer ersten Haltestellung und einem PED,
- Fig. 5: eine schematische Darstellung des Tischmoduls in dem zweiten Betriebszustand,
- Fig. 6: eine schematische Darstellung des Tischmoduls in dem zweiten Betriebszustand mit dem Halteelement des PED-Halters in einer zweiten Haltestellung und einem PED,
- Fig. 7: eine schematische Darstellung einer Schwenklagereinheit mit einem Rastmechanismus,
- Fig. 8: eine schematische Ansicht einer erfindungsgemäßen Flugzeugsitzvorrichtung in einem zweiten Ausführungsbeispiel,
- Fig. 9: eine schematische Ansicht einer erfindungsgemäßen Flugzeugsitzvorrichtung in einem dritten Ausführungsbeispiel,
- Fig. 10: eine schematische Ansicht einer erfindungsgemäßen Flugzeugsitzvorrichtung in einem vierten Ausführungsbeispiel,
- Fig. 11: eine weitere schematische Ansicht der erfindungsgemäßen Flugzeugsitzvorrichtung in dem vierten Ausführungsbeispiel,
- Fig. 12: eine schematische Ansicht einer erfindungsgemäßen Flugzeugsitzvorrichtung in einem fünften Ausführungsbeispiel und
- Fig. 13: eine weitere schematische Ansicht der erfindungsgemäßen Flugzeugsitzvorrichtung in dem fünften Ausführungsbeispiel.

### Beschreibung der Ausführungsbeispiele

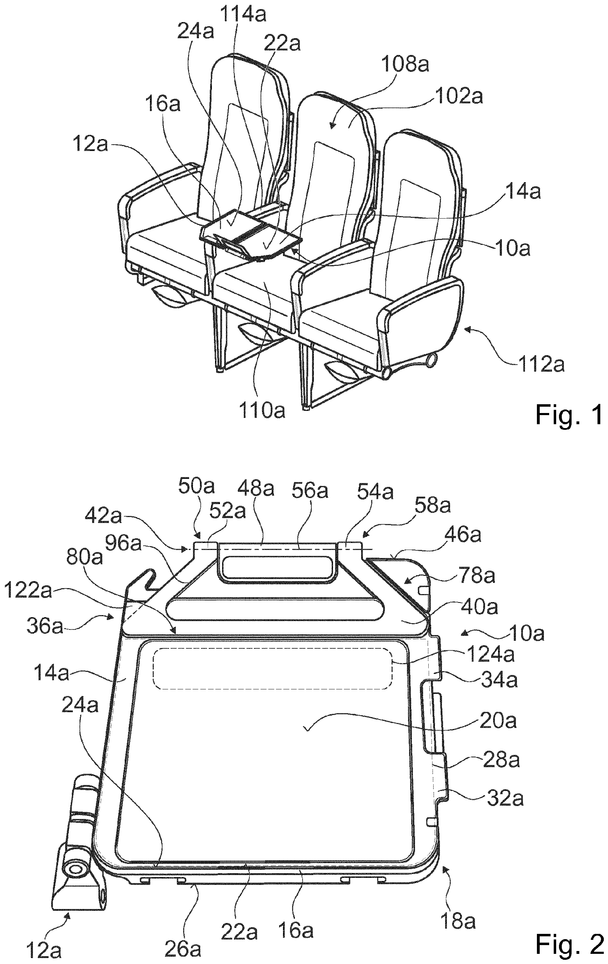

Die Figuren 1 bis 7 zeigen ein erstes Ausführungsbeispiel einer erfindungsgemäßen Flugzeugsitzvorrichtung. Die Flugzeugsitzvorrichtung ist Teil einer Flugzeugsitzvorrichtung, die einen Flugzeugsitz 108a umfasst. Die Flugzeugsitzvorrichtung ist in einer Flugzeugkabine angeordnet und auf einem Kabinenboden des Flugzeugs aufgeständert. Der Flugzeugsitz 108a ist dazu vorgesehen, dass auf ihm ein Passagier sitzen kann. Der Flugzeugsitz 108a bildet eine Sitzrichtung aus. Dazu weist der Flugzeugsitz 108a zumindest einen Sitzboden 110a und eine Rückenlehne 102a auf. Der Flugzeugsitz 108a weist weiter zwei Armlehnen 114a auf, die den Sitzboden 110a jeweils zu einer Seite hin begrenzen. Der Flugzeugsitz 108a ist dabei als Teil einer Sitzreihe 112a ausgebildet. Die Sitzreihe 112a ist dabei als eine vordere Sitzreihe ausgebildet, die keine vor sich angeordnete Sitzreihe aufweist. Grundsätzlich ist es auch denkbar, dass die Sitzreihe 112a auch als eine beliebig in der Flugzeugkabine angeordnete Sitzreihe ausgebildet ist. Es ist denkbar, dass der Flugzeugsitz 108a als ein Einzelsitz ausgebildet ist.

Die Flugzeugsitzvorrichtung umfasst ein Tischmodul 10a. Das Tischmodul 10a ist dazu vorgesehen, in zumindest einem Betriebszustand eine Ablagemöglichkeit bereitzustellen, auf der ein auf dem zugeordneten Flugzeugsitz 108a sitzender Passagier Gegenstände ablegen kann. Dabei ist das Tischmodul 10a, in Sitzrichtung gesehen, vor dem Flugzeugsitz 108a angeordnet. Das Tischmodul 10a ist dabei als ein Klapptischmodul ausgebildet. Das Tischmodul 10a weist eine Verstaustellung auf, in der das Tischmodul 10a in einen Aufbewahrungsraum verschwenkt ist. Der Aufbewahrungsraum ist dabei in der Armlehne 114a angeordnet. Dazu weist das Tischmodul 10a eine Lagereinheit 12a auf, welche zwei orthogonal zueinander ausgerichtete Schwenkachsen aufweist. Über die beiden Schwenkachsen kann das Tischmodul 10a mittels der Lagereinheit 12a zunächst um die erste Schwenkachse aus dem Aufbewahrungsraum herausgeschwenkt werden und dann um die zweite Schwenkachse in eine Gebrauchsstellung geschwenkt werden. Das Tischmodul 10a umfasst ein erstes Tischelement 14a und ein zweites Tischelement 16a. Die beiden Tischelemente 14a, 16a sind schwenkbar miteinander gekoppelt. Zur schwenkbaren Kopplung des ersten Tischelements 14a mit dem zweiten Tischelement 16a weist das Tischmodul 10a eine Lagereinheit 18a auf. Die Lagereinheit 18a bildet eine Schwenkachse aus, um die die beiden Tischelemente 14a, 16a zueinander schwenkbar sind. Die Schwenkachse der Lagereinheit 18a verläuft parallel zu der zweiten Schwenkachse der Lagereinheit 12a. Die Lagereinheit 18a verbindet ein zweites Ende des ersten Tischelements 14a und ein zweites Ende des zweiten Tischelements 16a. Zur Kopplung der Tischelemente 14a, 16a weist die Lagereinheit 18a ein erstes Lagerelement auf, das starr mit dem zweiten Ende des ersten Tischelements 14a verbunden ist, und ein zweites Lagerelement auf, das starr mit der zweiten Seite des zweiten Tischelements 16a verbunden ist. Die beiden Lagerelemente der Lagereinheit 18a sind über einen Lagerbolzen, der die Schwenkachse ausbildet, miteinander verbunden. Über die Lagereinheit 18a können die beiden Tischelemente 14a, 16a zwischen einer zusammengeklappten Stellung und einer ausgeklappten Stellung zueinander verschwenkt werden. In der zusammengeklappten Stellung ist das erste Tischelement 14a auf dem zweiten Tischelement 16a angeordnet. Dabei liegt eine zweite Seite 22a des ersten Tischelements 14a auf einer ersten Seite 24a des zweiten Tischelements 16a auf. Eine erste Seite 20a des ersten Tischelements 14a ist in der zusammengeklappten Stellung von dem zweiten Tischelement 16a weggerichtet. Eine zweite Seite 26a des zweiten Tischelements 16a ist in der zusammengeklappten Stellung von dem ersten Tischelement 14a weggerichtet. In der ausgeklappten Stellung sind die beiden Tischelemente 14a, 16a nebeneinander angeordnet. Dabei wird das erste Tischelement 14a bei einer Verschwenkung aus der zusammengeklappten Stellung in die ausgeklappte Stellung um 180 Grad zu dem zweiten Tischelement 16a verschwenkt. In der ausgeklappten Stellung sind die beiden Tischelemente 14a, 16a parallel zueinander angeordnet. In der ausgeklappten Stellung weisen die zweite Seite 22a des ersten Tischelements 14a und die erste Seite 24a des zweiten Tischelements 16a in dieselbe Richtung. Dabei sind die zweite Seite 22a des ersten Tischelements 14a und die erste Seite 24a des zweiten Tischelements 16a in der ausgeklappten Stellung nach oben gerichtet. Die Lagereinheit 18a weist zwei Sperrelemente 32a, 34a auf. Die Sperrelemente 32a, 34a sind dazu vorgesehen, die Tischelemente 14a, 16a auf einen maximalen Schwenkwinkel zu begrenzen, sodass diese bei maximaler Verschwenkung zueinander in der ausgeklappten Stellung parallel zueinander ausgerichtet sind. Die Sperrelemente 32a, 34a sind als Formschlusselemente ausgebildet, die über das zweite Ende des ersten Tischelements 14a hinausragen und auf einer ersten Seite 20a des ersten Tischelements 14a angeordnet sind. In der ausgeklappten Stellung greifen die als Formschlusselemente ausgebildeten Sperrelemente 32a, 34a unter das zweite Tischelement 16a und verhindern so ein weiteres Verschwenken der Tischelemente 14a, 16a zueinander.

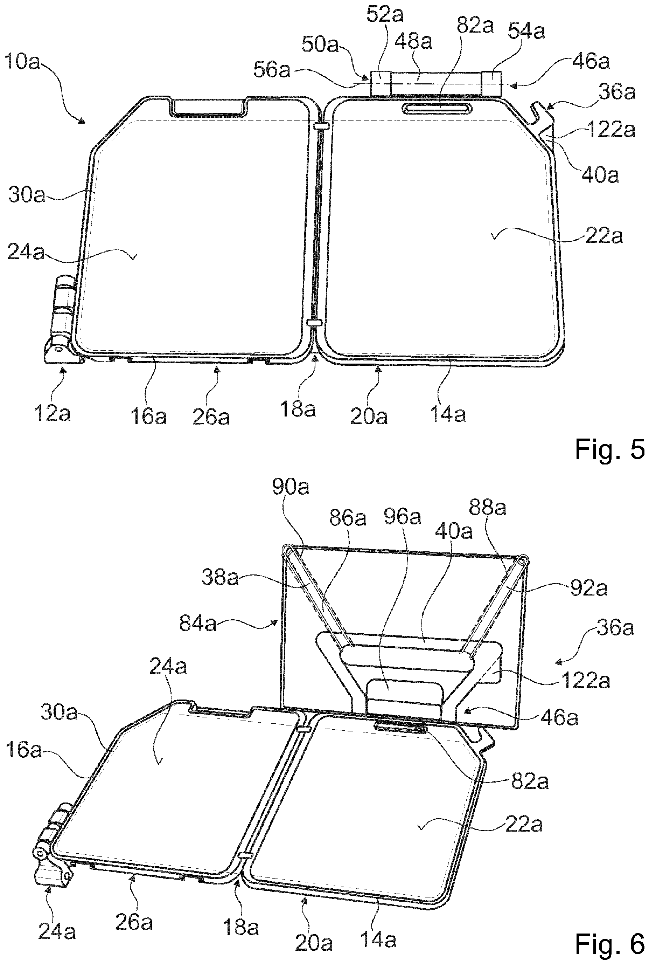

Das Tischmodul 10a weist einen ersten Betriebszustand und einen zweiten Betriebszustand auf. Die Betriebszustände des Tischmoduls 10a bilden Gebrauchsstellungen des Tischmoduls 10a aus. In dem ersten Betriebszustand ist das Tischmodul 10a aus der Verstaustellung herausgeschwenkt und die Tischelemente 14a, 16a sind in der zusammengeklappten Stellung (vergleiche Figur 2). Dadurch ist in dem ersten Betriebszustand das erste Tischelement 14a auf dem zweiten Tischelement 16a angeordnet. Die erste Seite 20a des ersten Tischelements 14a bildet dabei eine erste Tischoberfläche 28a aus. Das erste Tischelement 14a bildet in dem ersten Zustand allein die erste Tischoberfläche 28a aus. Die erste Tischoberfläche 28a entspricht dabei in etwa der Größe des ersten Tischelements 14a. In dem ersten Betriebszustand ist die erste Seite 20a des ersten Tischelements 14a nach oben, von dem Kabinenboden weggerichtet. In dem zweiten Betriebszustand ist das Tischmodul 10a aus der Verstaustellung herausgeschwenkt und die Tischelemente 14a, 16a sind in der ausgeklappten Stellung (vergleiche Figur 5). Dadurch ist in dem zweiten Betriebszustand das erste Tischelement 14a neben dem zweiten Tischelement 16a angeordnet. Die zweite Seite 22a des ersten Tischelements 14a bildet zusammen mit der ersten Seite 24a des zweiten Tischelements 16a eine zweite Tischoberfläche 30a aus. Die zweite Tischoberfläche 30a setzt sich aus dem ersten Tischelement 14a und dem zweiten Tischelement 16a zusammen. Die zweite Tischoberfläche 30a entspricht dabei in etwa einer Größe des ersten Tischelements 14a und einer Größe des zweiten Tischelements 16a. In dem zweiten Betriebszustand sind die zweite Seite 22a des ersten Tischelements 14a und die erste Seite 24a des zweiten Tischelements 16a in einer Ebene zueinander ausgerichtet. Die zweite Seite 22a des ersten Tischelements 14a und die erste Seite 24a des zweiten Tischelements 16a sind in dem zweiten Betriebszustand nach oben, von dem Kabinenboden weggerichtet. Die erste Seite 20a des ersten Tischelements 14a und die zweite Seite 26a des zweiten Tischelements 16a sind in dem zweiten Betriebszustand nach unten, dem Kabinenboden zugewandt.

Die Flugzeugsitzvorrichtung umfasst einen PED-Halter 36a. Der PED-Halter 36a ist dazu vorgesehen, ein PED 38a in einer Bedienposition auf dem Tischmodul 10a zu lagern. Dabei ist das PED 38a in der Bedienposition so auf dem Tischmodul 10a gelagert, dass ein auf dem Flugzeugsitz 108a, dem das Tischmodul 10a zugeordnet ist, sitzender Passagier das PED 38a komfortabel und einfach bedienen kann. Der PED-Halter 36a umfasst ein Halteelement 40a. Das Halteelement 40a ist dazu vorgesehen, eine Auflage- und/oder Abstützfläche für das zu lagernde PED 38a bereitzustellen. Das Halteelement 40a ist schwenkbar mit dem Tischmodul 10a verbunden. Dabei ist das Halteelement 40a in unterschiedlichen Stellungen zu dem Tischmodul 10a fixierbar. Das Halteelement 40a ist als ein flaches Element ausgebildet. Das Halteelement 40a weist eine in etwa trapezförmige Kontur auf. Dabei ist das Halteelement 40a mit einer schmalen Seite an dem Tischmodul 10a angebunden. Eine breite Seite ist von der Anbindung des Halteelements 40a an das Tischmodul 10a abgewandt. Dabei weist die breite Seite des trapezförmigen Halteelements 40a eine Länge auf, die einer Breite des ersten Tischelements 14a entspricht. Die äußeren Kanten des Halteelements 40a schließen an der breiten Seite mit den äußeren Kanten des ersten Tischelements 14a ab. Dadurch kann für ein in dem PED-Halter 36a gehaltenes PED 38a eine besonders große Abstützkante bereitgestellt werden. Das Ende an der breiten Seite des Halteelements 40a bildet die Abstützkante aus, an der sich das PED 38a in einem gehaltenen Zustand abstützt. Das Halteelement 40a weist eine mittig in das Halteelement 40a eingebrachte Durchgangsausnehmung 96a auf, die zur Gewichtsreduzierung vorgesehen ist. Grundsätzlich ist es auch denkbar, dass das Halteelement 40a als ein Biegeteil ausgebildet ist. Dabei wäre das Halteelement 40a beispielsweise aus einem Draht oder einem ähnlichen Material gebogen. Dabei hätte das Halteelement 40a wahlweise auch einen runden Querschnitt.

Zur schwenkbaren Lagerung des Halteelements 40a an dem Tischmodul 10a umfasst der PED-Halter 36a eine Schwenklagereinheit 42a. Die Schwenklagereinheit 42a ist dazu vorgesehen, das Halteelement 40a um mehr als 180 Grad zu verschwenken. Die Schwenklagereinheit 42a bildet eine Schwenkachse 56a aus, zu der das Halteelement 40a zu dem Tischmodul 10a schwenkbar ist. Die Schwenkachse 56a ist dabei in Querrichtung ausgerichtet, die orthogonal auf der Sitzrichtung des zugeordneten Flugzeugsitzes 108a verläuft. Die Schwenklagereinheit 42a ist an dem ersten Tischelement 14a angebracht. Das erste Tischelement 14a umfasst ein hinteres Ende 46a, welches von dem Flugzeugsitz 108a in den Betriebsstellungen abgewandt ist, an dem die Schwenklagereinheit 42a angebracht ist. Die Schwenklagereinheit 42a weist ein erstes Lagerelement 48a auf. Das erste Lagerelement 48a der Schwenklagereinheit 42a ist starr mit dem Tischmodul 10a verbunden. Das erste Lagerelement 48a ist an dem hinteren Ende 46a des ersten Tischelements 14a angebunden. Das erste Lagerelement 48a ist dabei einstückig mit dem ersten Tischelement 14a ausgebildet. Das Lagerelement 48a weist einen länglichen Grundkörper auf. In dem länglichen Grundkörper ist ein zylindrisches Durchgangsloch eingebracht. Der Grundkörper des Lagerelements 48a erstreckt sich parallel zu dem hinteren Ende 46a des ersten Tischelements 14a. Das Lagerelement 48a bildet eine Aufnahme für einen Lagerbolzen der Schwenklagereinheit 42a aus. Die Schwenklagereinheit 42a weist ein zweites Lagerelement 50a auf, das von dem Halteelement 40a des PED-Halters 36a gebildet wird. Das zweite Lagerelement 50a ist an dem schmalen Ende des Halteelements 40a angeordnet. Das zweite Lagerelement 50a ist von zwei zueinander beabstandet angeordneten Aufnahmen 52a, 54a gebildet. Ein Abstand zwischen den beiden Aufnahmen 52a, 54a des Lagerelements 50a ist dabei so groß wie eine Längserstreckung des Grundkörpers des ersten Lagerelements 48a. Der Grundkörper des ersten Lagerelements 48a ist in einem montierten Zustand zwischen den beiden Aufnahmen 52a, 54a angeordnet. Die Aufnahmen 52a, 54a weisen jeweils Durchgangslöcher 44a auf, durch die in montiertem Zustand zur Verbindung mit dem ersten Lagerelement 48a der Lagerbolzen der Schwenklagereinheit 42a geführt ist.

Die Schwenklagereinheit 42a umfasst einen Rastmechanismus 58a. Der Rastmechanismus 58a ist dazu vorgesehen, das Halteelement 40a in verschiedenen Stellungen zu arretieren. Dabei weist der Rastmechanismus 58a ein Rastprofil von 60 Grad auf. Der Rastmechanismus 58a arretiert das Halteelement 40a in Winkelabständen von 60 Grad. Ein erster Rastpunkt ist aus der Ruhestellung um 60 Grad verschwenkt. Ein zweiter Rastpunkt ist aus der Ruhestellung um 120 Grad verschwenkt. Ein dritter Rastpunkt ist aus der Ruhestellung um 180 Grad verschwenkt. Ein vierter Rastpunkt ist aus der Ruhestellung um 240 Grad verschwenkt. Ein fünfter Rastpunkt ist aus der Ruhestellung um 300 Grad verschwenkt. Grundsätzlich ist es auch denkbar, dass der Rastmechanismus 58a eine stufenlose Verstellung bereitstellt oder ein Rastprofil aufweist, welches andere Winkelabstände aufweist, wie beispielsweise 30 Grad. Grundsätzlich ist es auch denkbar, dass das Rastprofil ungleichmäßige Winkelabstände aufweist. Der Rastmechanismus 58a ist in den beiden Aufnahmen 52a, 54a des zweiten Lagerelements 50a angeordnet. Der Rastmechanismus 58a weist zwei Rastscheiben 60a, 62a, zwei Gegenelemente 64a, 66a und zwei Federelemente 68a, 70a auf. In jeder Aufnahme 52a, 54a sind dabei jeweils eine Rastscheibe 60a, 62a, ein Gegenelement 64a, 66a sowie ein Federelement 68a, 70a angeordnet. Im Folgenden soll deshalb die Funktion des Rastmechanismus 58a lediglich anhand einer Seite und der entsprechenden Rastscheibe 60a, des Gegenelements 64a und des Federelements 68a beschrieben werden. Eine Ausgestaltung und ein Zusammenwirken der Rastscheibe 62a, des Gegenelements 66a und des Federelements 70a kann entsprechend der folgenden Beschreibung entnommen werden. Die Rastscheibe 60a ist drehfest an einem inneren Ende des Durchgangslochs 44a der Aufnahme 52a angeordnet. Die Rastscheibe 60a weist auf ihrer nach außen gerichteten Axialseite eine umlaufende Wellenkontur 72a auf. Das axial neben der Rastscheibe 60a angeordnete Gegenelement 64a weist eine korrespondierend zu der Wellenkontur 72a der Rastscheibe 60a ausgebildete Wellenkontur 74a auf. Das Gegenelement 64a steht in einem montierten Zustand mit seiner Wellenkontur 72a in einem formschlüssigen Kontakt mit der Wellenkontur 72a der Rastscheibe 60a. Das Gegenelement 64a ist dabei axial verschiebbar in dem Durchgangsloch 44a der Aufnahme 52a angeordnet. Dabei ist das Gegenelement 64a drehfest zu dem Lagerbolzen gelagert. Das Federelement 68a wird von einer oder mehreren Tellerfedern ausgebildet. Grundsätzlich ist es auch denkbar, dass das Federelement 68a als eine andere, dem Fachmann als sinnvoll erscheinende Feder ausgebildet ist, wie beispielsweise als eine Spiralfeder. Das Federelement 68a ist zwischen dem Gegenelement 64a und einem Befestigungselement 76a des Lagerbolzens angeordnet. Das Befestigungselement 76a ist als ein Schraubenelement ausgebildet und ist mit dem Lagerbolzen verbunden. Das Befestigungselement 76a ist über ein Gewinde fest mit dem Lagerbolzen verbunden und hält so die beiden Lagerelemente 48a, 50a in einem montierten Zustand zusammen. Das Befestigungselement 76a spannt das Federelement 68a vor, wodurch das Federelement 68a eine Kraft auf das Gegenelement 64a ausübt, die in Richtung der Rastscheibe 60a gerichtet ist. Durch den Eingriff der Wellenkonturen 72a, 74a der Rastscheibe 60a und des Gegenelements 64a ineinander ist das Halteelement 40a fixiert. Das Federelement 68a drückt die Rastscheibe 60a und das Gegenelement 64a in einen Kontakt miteinander. Wird das Halteelement 40a zu dem Tischmodul 10a verschwenkt, verdreht sich die drehfest in dem Durchgangsloch 44a der Aufnahme 52a angeordnete Rastscheibe 60a zu dem Gegenelement 64a. Dabei wird das Gegenelement 64a durch die ineinander greifenden Wellenkonturen 72a, 74a axial entgegen der Federkraft des Federelements 68a ausgelenkt. Treffen nach weiterer Verdrehung der Rastscheibe 60a und des Gegenelements 64a wieder ein Wellental und ein Wellenberg der korrespondierend ausgebildeten Wellenkonturen 72a, 74a zusammen, so rastet das Gegenelement 64a wieder in die Rastscheibe 60a ein und das Halteelement 40a ist in einer entsprechenden Position verrastet. Durch die Form der Wellenkonturen 72a, 74a ist ein Winkelabstand, in dem das Halteelement 40a zu dem Tischmodul 10a fixierbar ist, vorgegeben.

Der PED-Halter 36a weist eine Griffstelle 122a auf. Die Griffstelle 122a ist von dem Halteelement 40a ausgebildet. Die Griffstelle 122a bildet einen Bereich aus, über den das Halteelement 40a vorteilhaft von einer Person betätigt, also verschwenkt werden kann. Die Griffstelle 122a ist dazu vorgesehen, dass sie von einer Person zum Verschwenken des Halteelements 40a ergriffen wird. Die Griffstelle 122a ist dabei in einem äußeren Bereich des Halteelements 40a, insbesondere an seiner breiten Seite, angeordnet. Der Griffbereich ist dabei farblich markiert, sodass dieser leicht von einem Passagier erkennbar ist. Die Griffstelle 122a ist dabei in beiden Betriebszuständen des Tischmoduls 10a von einem Passagier betätigbar. In dem ersten Betriebszustand des Tischmoduls 10a ist das Halteelement 40a durch Ziehen an der Griffstelle 122a aus seiner Verstaustellung zu bewegen. In dem zweiten Betriebszustand des Tischmoduls 10a ist das Halteelement 40a durch Drücken an der Griffstelle 122a aus seiner Verstaustellung bewegbar. Weiter weist der PED-Halter 36a ein Piktogramm 124a auf, welches auf dem Tischmodul 10a angebracht ist. Das Piktogramm 124a zeigt bildhaft, wie der PED-Halter 36a zu bedienen ist. Dabei ist das Piktogramm 124a auf einer ersten Seite 20a des ersten Tischelements 14a angeordnet.

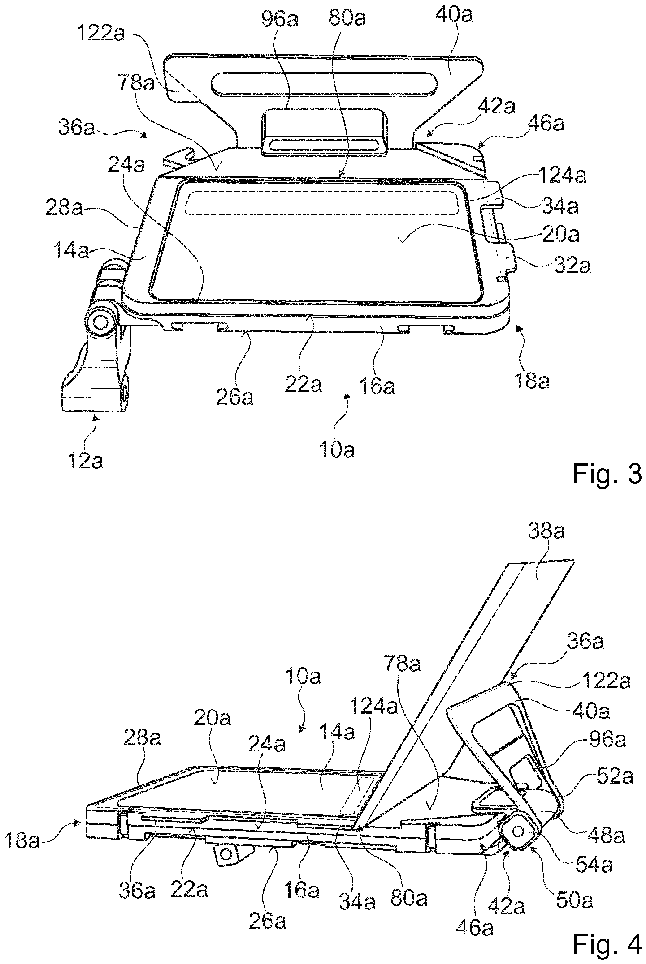

Das Halteelement 40a weist mehrere erste Haltestellungen auf. In den ersten Haltestellungen, von denen eine in Figur 3 und Figur 4 gezeigt ist, ist das Halteelement 40a dazu vorgesehen, in dem ersten Betriebszustand des Tischmoduls 10a eine Halterung für das PED 38a bereitzustellen. In den ersten Haltestellungen ist das Halteelement 40a um einen Winkel zwischen 5 und 180 Grad aus seiner Verstaustellung zu dem ersten Tischelement 14a des Tischmoduls 10a verschwenkt. In den ersten Haltestellungen ist das Halteelement 40a oberhalb der ersten Seite 20a des ersten Tischelements 14a angeordnet. In den ersten Haltesellungen kann in dem ersten Betriebszustand, in dem die erste Seite 20a des ersten Tischelements 14a die erste Tischoberfläche 28a ausbildet, das PED 38a zwischen dem Halteelement 40a und der ersten Seite 20a des ersten Tischelements 14a gelagert werden. Das PED 38a liegt in der ersten Haltestellung mit seiner Unterseite auf dem ersten Tischelement 14a auf. Dabei sind in der ersten Haltestellung des Halteelements 40a noch 70% der Tischoberfläche 28a, die das erste Tischelement 14a in der Verstaustellung des Halteelements 40a bereitstellt, zum Abstellen von Gegenständen nutzbar.

Das Halteelement 40a weist mehrere zweite Haltestellungen auf. In den zweiten Haltestellungen, von denen eine in Figur 6 gezeigt ist, ist das Halteelement 40a dazu vorgesehen, in dem zweiten Betriebszustand des Tischmoduls 10a eine Halterung für das PED 38a bereitzustellen. In den zweiten Haltestellungen ist das Halteelement 40a um einen Winkel zwischen 181 und 360 Grad, vorzugsweise aber um 240 Grad aus seiner Verstaustellung zu dem ersten Tischelement 14a des Tischmoduls 10a verschwenkt. In den zweiten Haltestellungen ist das Halteelement 40a oberhalb der zweiten Seite 22a des ersten Tischelements 14a angeordnet. In den zweiten Haltesellungen kann in dem zweiten Betriebszustand des Tischmoduls 10a, in dem die zweite Seite 22a des ersten Tischelements 14a zusammen mit der ersten Seite 24a des zweiten Tischelements 16a die zweite Tischoberfläche 30a ausbildet, das PED 38a zwischen dem Halteelement 40a und der ersten Seite 20a des ersten Tischelements 14a gelagert werden. Das PED 38a liegt in der zweiten Haltestellung mit seiner Unterseite auf dem ersten Tischelement 14a auf.

Das erste Tischelement 14a bildet eine Vertiefung 78a aus. Die Vertiefung 78a ist dazu vorgesehen, in einer Verstaustellung des PED-Halters 36a das Halteelement 40a aufzunehmen. Dazu weist die Vertiefung 78a eine Kontur auf, die der Kontur des Halteelements 40a entspricht. Eine Tiefe der Vertiefung 78a entspricht einer Dicke des Halteelements 40a, sodass das Halteelement 40a in der Verstaustellung mit der Oberfläche des Tischelements 14a eine ebene Oberfläche ausbildet. Die Vertiefung 78a ist auf der ersten Seite 20a des ersten Tischelements 14a angeordnet. Die Vertiefung 78a ist an dem hinteren Ende 46a des ersten Tischelements 14a in die erste Seite 20a eingebracht. Die Vertiefung 78a bildet einen Anschlag 80a aus. Der Anschlag 80a ist dazu vorgesehen, in einer der ersten Haltestellungen des Halteelements 40a eine Abstützfläche für das PED 38a bereitzustellen. In einer ersten Haltestellung des Halteelements 40a liegt das PED 38a in einer Bedienposition mit seiner Rückseite an dem Halteelement 40a an und mit einem unteren Ende an dem Anschlag 80a, der von der Vertiefung 78a ausgebildet ist. Für eine sichere Auflage in der Vertiefung 78a weist der PED-Halter 36a in einem Bereich des Anschlags 80a eine nicht näher dargestellte Beschichtung auf. Die Beschichtung ist als eine Anti-Rutsch-Beschichtung ausgebildet, die dazu vorgesehen ist, in dem entsprechenden Bereich einen Reibwert zu erhöhen. Durch die Abstützfläche, die der Anschlag 80a ausbildet, kann sich das PED 38a in einem gehaltenen Zustand abstützen und das Halteelement 40a muss nicht zwangsläufig an einem Schwerpunkt des PEDs 38a angreifen, um einen sicheren Stand zu garantieren. Dadurch ist der PED-Halter 36a sehr variabel.

Der PED-Halter 36a weist ein Abstützelement 82a auf. Das Abstützelement 82a ist dazu vorgesehen, in einer zweiten Haltestellung des Halteelements 40a eine Abstützfläche für das PED 38a bereitzustellen. Das Abstützelement 82a ist auf der zweiten Seite 22a des ersten Tischelements 14a angeordnet. Das Abstützelement 82a ist dabei als eine Erhöhung ausgebildet. Grundsätzlich wäre es auch denkbar, dass das Abstützelement 82a als eine Kerbe ausgebildet ist. In dem Bereich, in dem das Abstützelement 82a die Abstützfläche für das PED 38a bereitstellt, weist der PED-Halter 36a eine nicht näher dargestellte Beschichtung auf. Die Beschichtung ist als eine Anti-Rutsch-Beschichtung ausgebildet, die dazu vorgesehen ist, in dem entsprechenden Bereich der Abstützfläche einen Reibwert zu erhöhen. In einer zweiten Haltestellung des Halteelements 40a liegt das PED 38a in einer Bedienposition mit seiner Rückseite an dem Halteelement 40a und mit einem unteren Ende an dem Anschlag 80a des Abstützelements 82a an.

Der PED-Halter 36a weist eine Sicherungsvorrichtung 84a auf. Die Sicherungsvorrichtung 84a ist dazu vorgesehen, das PED 38a in einem in dem PED-Halter 36a gehaltenen Zustand vor einem Herausfallen zu sichern. Die Sicherungsvorrichtung 84a weist zwei Halteelemente 86a, 88a auf. Die Halteelemente 86a, 88a sind als elastische Bänder ausgebildet. Die beiden Halteelemente 86a, 88a sind mit ihrem ersten Ende jeweils an dem Halteelement 40a fest angebunden. An ihren zweiten Enden weisen die Halteelemente 86a, 88a jeweils ein Koppelelement 90a, 92a auf. Die Koppelelemente 90a, 92a sind dabei als Schlaufen ausgebildet. Über die Koppelelemente 90a, 92a sind die beiden Halteelemente 86a, 88a mit oberen Kanten des PEDs 38a koppelbar. Zur Sicherung eines in dem PED-Halter 36a gehaltenen PEDs 38a können die Halteelemente 86a, 88a über die Koppelelemente 90a, 92a mit oberen Kanten des PEDs 38a verbunden werden und das PED 38a so in dem PED-Halter 36a sichern. Dazu werden die als Schlaufen ausgebildeten Koppelelemente 90a, 92a jeweils über eine obere Kante des PEDs 38a gestülpt.

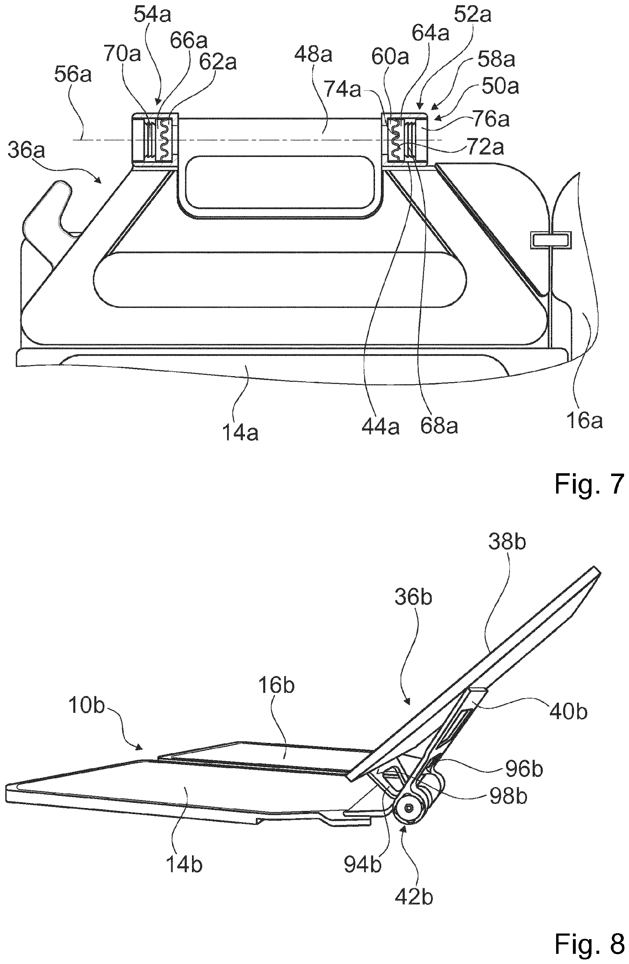

In den Figuren 8 bis 13 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 8 bis 13 ist der Buchstabe a durch die Buchstaben b bis e ersetzt.

Die Figur 8 zeigt ein zweites Ausführungsbeispiel der erfindungsgemäßen Flugzeugsitzvorrichtung. Die Flugzeugsitzvorrichtung des zweiten Ausführungsbeispiels ist im Wesentlichen gleich ausgebildet wie die Flugzeugsitzvorrichtung des ersten Ausführungsbeispiels.

Die Flugzeugsitzvorrichtung umfasst ein Tischmodul 10b. Das Tischmodul 10b ist dazu vorgesehen, in zumindest einem Betriebszustand eine Ablagemöglichkeit bereitzustellen, auf der ein auf dem zugeordneten Flugzeugsitz sitzender Passagier Gegenstände ablegen kann. Das Tischmodul 10b umfasst ein erstes Tischelement 14b und ein zweites Tischelement 16b. Die beiden Tischelemente 14b, 16b sind schwenkbar miteinander gekoppelt. Das Tischmodul 10b mit seinen Tischelementen 14b, 16b ist gleich ausgebildet wie in dem ersten Ausführungsbeispiel.

Die Flugzeugsitzvorrichtung umfasst einen PED-Halter 36b. Der PED-Halter 36b ist dazu vorgesehen, ein PED 38b in einer Bedienposition auf dem Tischmodul 10b zu lagern. Dabei ist das PED 38b in der Bedienposition so auf dem Tischmodul 10b gelagert, dass ein auf dem Flugzeugsitz, dem das Tischmodul 10b zugeordnet ist, sitzender Passagier das PED 38b komfortabel und einfach bedienen kann. Der PED-Halter 36b umfasst ein Halteelement 40b. Das Halteelement 40b ist dazu vorgesehen, eine Auflage- und/oder Abstützfläche für das zu lagernde PED 38b bereitzustellen. Das Halteelement 40b weist eine in etwa trapezförmige Kontur auf. Dabei ist das Halteelement 40b mit einer schmalen Seite an dem Tischmodul 10b angebunden. Eine breite Seite ist von der Anbindung des Halteelements 40b an das Tischmodul 10b abgewandt. Das Halteelement 40b weist eine mittig in das Halteelement 40b eingebrachte Durchgangsausnehmung 96b auf, die zur Gewichtsreduzierung vorgesehen ist.

Im Unterschied zu dem ersten Ausführungsbeispiel aus den Figuren 1 bis 7 weist der PED-Halter 36b ein schwenkbares unteres Abstützelement 94b auf. Das schwenkbare Abstützelement 94b ist schwenkbar mit dem Halteelement 40b des PED-Halters 36b verbunden. Dabei ist das schwenkbare Abstützelement 94b an einem unteren, schmalen, dem Tischmodul 10b zugewandten Ende des Halteelements 40b angeordnet. Dabei ist das schwenkbare Abstützelement 94b über eine selbe Schwenkachse drehbar wie das Halteelement 40b. Das Abstützelement 94b ist dabei in einem Bereich der Durchgangsausnehmung 96b des Halteelements 40b angeordnet. Das Abstützelement 94b weist dabei eine Kontur der Durchgangsausnehmung 96b auf. Das Abstützelement 94b weist eine eingeklappte Stellung auf, in der das Abstützelement 94b komplett in der Durchgangsausnehmung 96b angeordnet ist und parallel zu dem Halteelement 40b ausgerichtet ist. Das Abstützelement 94b weist zwei ausgeklappte Stellungen auf. In den ausgeklappten Stellungen ist das Abstützelement 94b zu dem Halteelement 40b verschwenkt und bildet jeweils eine zu dem Halteelement 40b abgewinkelt ausgerichtete Abstützfläche 98b aus, auf der sich das PED 38b mit seinem unteren Ende abstützen kann. Das Abstützelement 94b ist dabei um 180 Grad verschwenkbar. Das Abstützelement 94b kann durch Verschwenken aus der eingeklappten Stellung in eine erste Richtung zur Abstützung eines PEDs 38b in einer ersten Haltestellung des Halteelements 40b genutzt werden. Durch Verschwenken aus der eingeklappten Stellung in eine zweite Richtung kann das Abstützelement 94b zur Abstützung des PEDs 38b in einer zweiten Haltestellung des Halteelements 40b genutzt werden.

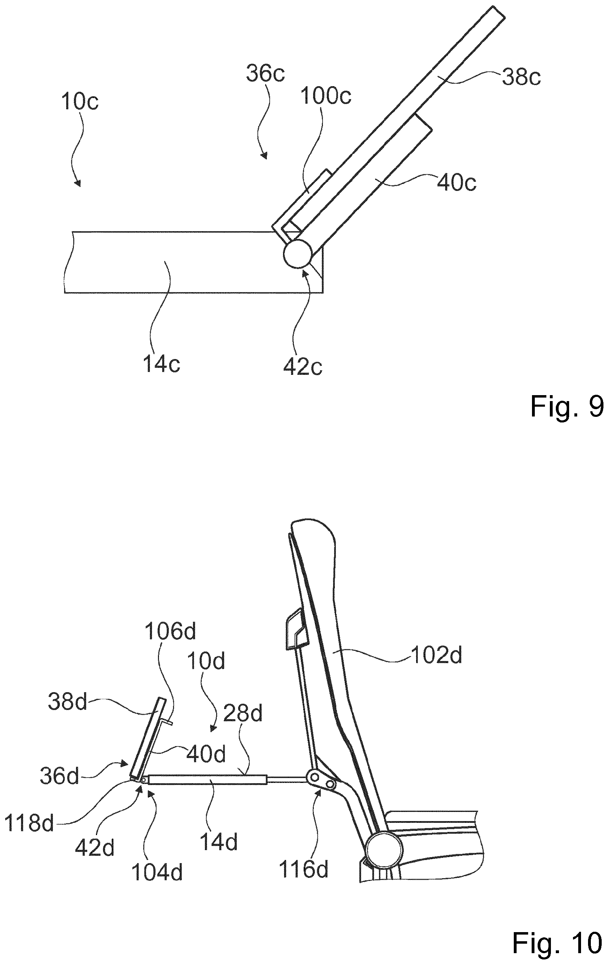

Figur 9 zeigt ein drittes Ausführungsbeispiel der erfindungsgemäßen Flugzeugsitzvorrichtung. Die Flugzeugsitzvorrichtung des dritten Ausführungsbeispiels ist im Wesentlichen gleich ausgebildet wie die Flugzeugsitzvorrichtung des ersten und die des zweiten Ausführungsbeispiels.

Die Flugzeugsitzvorrichtung umfasst ein Tischmodul 10c. Das Tischmodul 10c ist dazu vorgesehen, in zumindest einem Betriebszustand eine Ablagemöglichkeit bereitzustellen, auf der ein auf dem zugeordneten Flugzeugsitz sitzender Passagier Gegenstände ablegen kann. Das Tischmodul 10c umfasst ein erstes Tischelement 14c und ein zweites Tischelement 16c. Die beiden Tischelemente 14c sind schwenkbar miteinander gekoppelt. Das Tischmodul 10c mit seinen Tischelementen 14c ist gleich ausgebildet wie in dem ersten Ausführungsbeispiel. Die Flugzeugsitzvorrichtung umfasst einen PED-Halter 36c. Der PED-Halter 36c ist dazu vorgesehen, ein PED 38c in einer Bedienposition auf dem Tischmodul 10c zu lagern. Dabei ist das PED 38c in der Bedienposition so auf dem Tischmodul 10c gelagert, dass ein auf dem Flugzeugsitz, dem das Tischmodul 10c zugeordnet ist, sitzender Passagier das PED 38c komfortabel und einfach bedienen kann. Der PED-Halter 36c umfasst ein Halteelement 40c. Das Halteelement 40c ist dazu vorgesehen, eine Auflage- und/oder Abstützfläche für das zu lagernde PED 38c bereitzustellen. Das Halteelement 40c weist eine in etwa trapezförmige Kontur auf. Dabei ist das Halteelement 40c mit einer schmalen Seite an dem Tischmodul 10c angebunden. Eine breite Seite ist von der Anbindung des Halteelements 40c an das Tischmodul 10c abgewandt. Das Halteelement 40c weist eine mittig in das Halteelement 40c eingebrachte Durchgangsausnehmung 96c auf, die zur Gewichtsreduzierung vorgesehen ist.

Im Unterschied zu dem zweiten Ausführungsbeispiel aus der Figur 7 weist der PED-Halter 36c anstelle eines Abstützelements ein Klemmelement 100c auf. Das Klemmelement 100c ist dazu vorgesehen, ein unteres Ende des in dem PED-Halter 36c angeordneten PEDs 38c zwischen dem Klemmelement 100c und dem Halteelement 40c einzuklemmen. Das Klemmelement 100c ist wie das Abstützelement aus dem zweiten Ausführungsbeispiel an einem unteren Ende des Halteelements 40c schwenkbar gelagert. Das Klemmelement 100c ist dabei mittels eines nicht näher dargestellten Federelements mit einer Schließkraft vorgespannt, die in Richtung des Halteelements 40c wirkt. Zur Anbringung des PED 38c in dem PED-Halter 36c muss das Klemmelement 100c aus seiner an das Halteelement 40c angeklappten Ruhestellung entgegen der Schließkraft des Federelements ausgelenkt werden, sodass das PED 38c zwischen dem Klemmelement 100c und dem Halteelement 40c platziert werden kann. Wird das Klemmelement 100c nun losgelassen, drückt das Klemmelement 100c das PED 38c durch die Schließkraft des Federelements gegen das Halteelement 40c und befestigt das PED 38c so sicher in dem PED-Halter 36c.

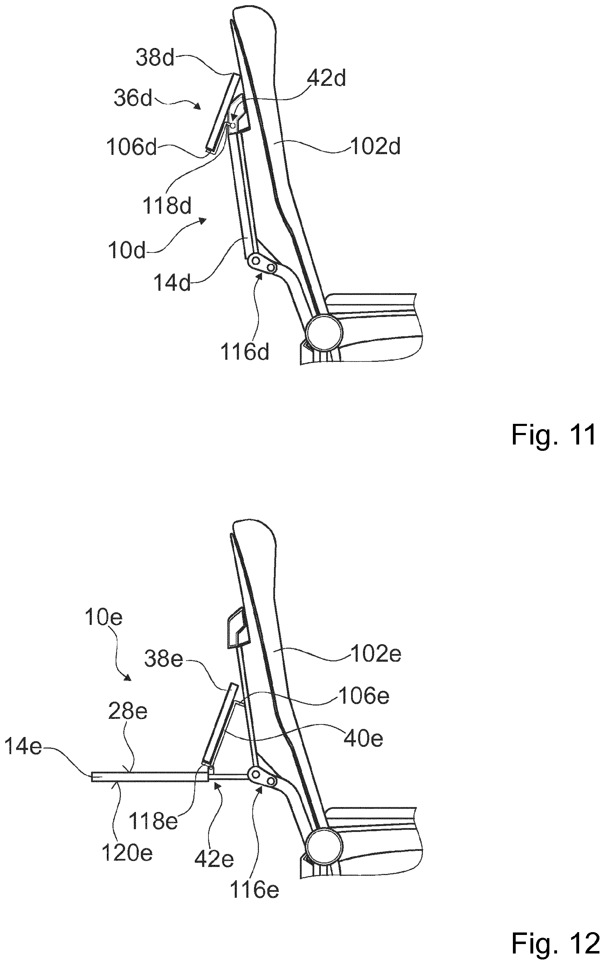

Die Figuren 10 und 11 zeigen ein viertes Ausführungsbeispiel einer erfindungsgemäßen Flugzeugsitzvorrichtung. Die Flugzeugsitzvorrichtung weist ein Tischmodul 10d auf. Im Unterschied zu den ersten Ausführungsbeispielen weist das Tischmodul 10d lediglich ein Tischelement 14d auf. Das Tischmodul 10d ist schwenkbar an einer Rückenlehne 102d eines vor einem Flugzeugsitz, dem das Tischmodul 10d zugeordnet ist, angeordneten Flugzeugsitzes angebracht. Das Tischmodul 10d ist dabei über eine Schwenklagerung 116d zwischen einer an der Rückenlehne 102d angeklappten Ruhestellung und einer um etwa 90 Grad zu der Rückenlehne 102d verschwenkten Gebrauchsstellung verschwenkbar. Figur 10 zeigt dabei die Gebrauchsstellung des Tischmoduls 10d. In der Gebrauchsstellung bildet das Tischelement 14d des Tischmoduls 10d eine Tischoberfläche 28d aus, auf der Gegenstände angeordnet werden können. Die Figur 11 zeigt die angeklappte Ruhestellung des Tischmoduls 10d. In der angeklappten Ruhestellung ist die Tischoberfläche 28d des Tischelements 14d der Rückenlehne 102d zugewandt. Eine der Tischoberfläche 28d abgewandte Rückseite 120d des Tischelements 14d ist der Rückenlehne 102d abgewandt.

Die Flugzeugsitzvorrichtung umfasst einen PED-Halter 36d. Der PED-Halter 36d ist dazu vorgesehen, ein PED 38d in einer Bedienposition auf dem Tischmodul 10d zu lagern. Dabei ist das PED 38d in der Bedienposition so auf dem Tischmodul 10d gelagert, dass ein auf dem Flugzeugsitz, dem das Tischmodul 10d zugeordnet ist, sitzender Passagier das PED 38d komfortabel und einfach bedienen kann. Im Unterschied zu den vorhergehenden Ausführungsbespielen ist der PED-Halter 36d an einem vorderen Ende 104d angeordnet, welches in einer Gebrauchsstellung dem zugeordneten Flugzeugsitz zugewandt ist. Der PED-Halter 36d weist ein Halteelement 40d auf. Das Halteelement 40d ist über eine Schwenklagereinheit 42d zu dem Tischmodul 10d verschwenkbar. Dabei ist das Halteelement 40d mittels der Schwenklagereinheit 42d um mehr als 180 Grad zu dem Tischmodul 10d verschwenkbar. Die Schwenklagereinheit 42d ist dabei so ausgebildet wie die entsprechenden Schwenklagereinheiten aus den vorhergehenden Ausführungsbeispielen. Dabei weist die Schwenklagereinheit 42d einen nicht näher dargestellten Rastmechanismus auf, über den die Schwenklagereinheit 42d, und damit das Halteelement 40d, in unterschiedlichen Winkelstellungen zu dem Tischelement 14d fixierbar ist. Das Halteelement 40d ist mit einem ersten Ende mit der Schwenklagereinheit 42d verbunden. An dem ersten Ende weist das Halteelement 40d ein Abstützelement 118d auf. Das Abstützelement 118d ist als eine Erhebung ausgebildet, die sich von dem Halteelement 40d aus in eine erste Richtung erhebt. An einem zweiten Ende bildet das Halteelement 40d ein um etwa 90 Grad abgeknicktes zweites Abstützelement 106d aus. Das zweite Abstützelement 106d ist als eine Erhebung ausgebildet, die sich von dem Halteelement 40d aus in eine, der ersten Richtung, in die sich das erste Abstützelement 118d erstreckt, im Wesentlichen entgegengesetzte zweite Richtung erstreckt.

In einer ersten Haltestellung des Halteelements 40d ist das Tischmodul 10d an die Rückenlehne 102d angeklappt, wobei das Tischmodul 10d nicht zum Ablegen von Elementen genutzt werden kann (vgl. Figur 11). In der ersten Haltestellung ist das Halteelement 40d von dem vorderen Ende 104d aus vor der Rückseite 120d des Tischelements 14d geklappt. Das Abstützelement 106d ist dabei von dem Tischmodul 10d weggerichtet. Das PED 38d liegt dabei mit einem unteren Ende auf dem Abstützelement 106d auf. Ein oberes Ende des PEDs 38d liegt an der Rückenlehne 102d an. Dabei ist an der Rückenlehne 102d ein nicht näher dargestelltes Sicherungselement angebracht, das das PED 38d sichert. Das Sicherungselement ist dabei als ein Gummiband ausgebildet, das um einen Teil des PEDs 38d gespannt werden kann, um diesen zu sichern.

In einer zweiten Haltestellung des Halteelements 40d ist das Tischmodul 10d in die Gebrauchsstellung geklappt, wobei das Tischmodul 10d zum Ablegen von Elementen genutzt werden kann. Figur 10 zeigt eine zweite Haltestellung des Halteelements 40d. Das Halteelement 40d ist in der zweiten Haltestellung von dem vorderen Ende aus über die Tischoberfläche 28d des Tischelements 14d des Tischmoduls 10d geklappt. Das PED 38d liegt dabei mit einem unteren Ende auf dem ersten Abstützelement 118d auf. In einer Verstaustellung ist das Halteelement 40d des PED-Halters 36d an das Tischmodul 10d angeklappt. Dabei weist das Tischelement 14d eine nicht näher dargestellte Ausnehmung auf, in der das Halteelement 40d verstaut werden kann. Die Ausnehmung zur Verstauung des Halteelements 40d ist dabei in die Rückseite 120d des Tischelements 14d eingebracht. Grundsätzlich wäre es auch denkbar, dass die Ausnehmung zur Verstauung des Halteelements 40d in eine die Tischoberfläche 28d ausbildende Oberseite des Tischelements 14d eingebracht ist.

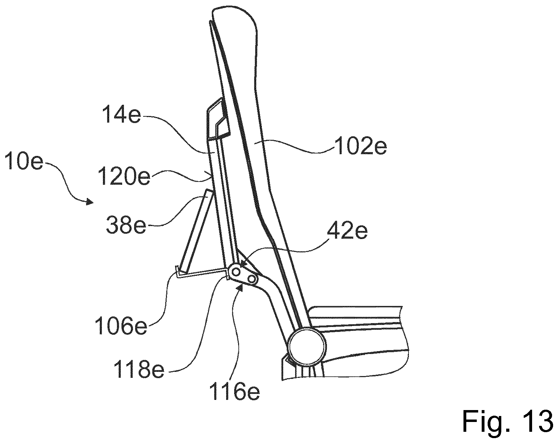

Die Figuren 12 und 13 zeigen ein fünftes Ausführungsbeispiel einer erfindungsgemäßen Flugzeugsitzvorrichtung. Die Flugzeugsitzvorrichtung weist ein Tischmodul 10e auf. Im Unterschied zu den ersten vier Ausführungsbeispielen weist das Tischmodul 10e lediglich ein Tischelement 14e auf. Das Tischmodul 10e ist ausgebildet wie das entsprechende Tischmodul aus dem vierten Ausführungsbeispiel der Figuren 10 und 11. Das Tischmodul 10e ist schwenkbar an einer Rückenlehne 102e eines vor einem Flugzeugsitz, dem das Tischmodul 10e zugeordnet ist, angeordneten Flugzeugsitzes angebracht. Das Tischmodul 10e ist dabei über eine Schwenklagerung 116e zwischen einer an der Rückenlehne 102e angeklappten Ruhestellung und einer um etwa 90 Grad zu der Rückenlehne 102e verschwenkten Gebrauchsstellung verschwenkbar. Figur 10 zeigt dabei die Gebrauchsstellung des Tischmoduls 10e. Die Figur 11 zeigt die angeklappte Ruhestellung des Tischmoduls 10e.

Die Flugzeugsitzvorrichtung umfasst einen PED-Halter 36e. Der PED-Halter 36e ist dazu vorgesehen, ein PED 38e in einer Bedienposition auf dem Tischmodul 10e zu lagern. Dabei ist das PED 38e in der Bedienposition so auf dem Tischmodul 10e gelagert, dass ein auf dem Flugzeugsitz, dem das Tischmodul 10e zugeordnet ist, sitzender Passagier das PED 38e komfortabel und einfach bedienen kann. Im Unterschied zu dem vorhergehenden vierten Ausführungsbeispiel aus den Figuren 10 und 11 ist der PED-Halter 36e an einem hinteren Ende 46e des Tischmoduls 10e angeordnet, welches in einer Gebrauchsstellung dem zugeordneten Flugzeugsitz zugewandt ist. Der PED-Halter 36e weist ein Halteelement 40e auf. Das Halteelement 40e ist über eine Schwenklagereinheit 42e zu dem Tischmodul 10e verschwenkbar. Dabei ist das Halteelement 40e mittels der Schwenklagereinheit 42e um mehr als 180 Grad zu dem Tischmodul 10e verschwenkbar. Die Schwenklagereinheit 42e ist dabei so ausgebildet wie die entsprechenden Schwenklagereinheiten aus den vorhergehenden Ausführungsbeispielen. Dabei weist die Schwenklagereinheit 42e einen nicht näher dargestellten Rastmechanismus auf, über den die Schwenklagereinheit 42e, und damit das Halteelement 40e, in unterschiedlichen Winkelstellungen zu dem Tischelement 14e fixierbar ist. Das Halteelement 40e ist mit einem ersten Ende mit der Schwenklagereinheit 42e verbunden. An dem ersten Ende weist das Halteelement 40e ein Abstützelement 118e auf. Das Abstützelement 118e ist als eine Erhebung ausgebildet, die sich von dem Halteelement 40e aus in eine erste Richtung erhebt. An einem zweiten Ende bildet das Halteelement 40e ein um etwa 90 Grad abgeknicktes zweites Abstützelement 106e aus. Das zweite Abstützelement 106e ist als eine Erhebung ausgebildet, die sich von dem Halteelement 40e aus in eine, der ersten Richtung, in die sich das erste Abstützelement 118e erstreckt, im Wesentlichen entgegengesetzte zweite Richtung erstreckt.

In einer ersten Haltestellung des Halteelements 40e ist das Tischmodul 10e an die Rückenlehne 102e angeklappt, wobei das Tischmodul 10e nicht zum Ablegen von Elementen genutzt werden kann (vgl. Figur 13). In der ersten Haltestellung ist das Halteelement 40e von dem hinteren Ende 46e aus vor eine Rückseite 120e des Tischelements 14e geklappt. Das Abstützelement 106e ist dabei nach oben gerichtet. Das PED 38e liegt dabei mit einem unteren Ende an dem Abstützelement 106e an. Ein oberes Ende des PEDs 38e liegt an der Rückseite 120e des Tischelements 14e an. Dabei ist an der Rückseite 120e des Tischelements 14e ein nicht näher dargestelltes Sicherungselement angebracht, das das PED 38e sichert. Das Sicherungselement ist dabei als ein Gummiband ausgebildet, das um einen Teil des PEDs 38e gespannt werden kann, um diesen zu sichern.

In einer zweiten Haltestellung des Halteelements 40e ist das Tischmodul 10e in die Gebrauchsstellung geklappt, wobei das Tischmodul 10e zum Ablegen von Elementen genutzt werden kann. Figur 10 zeigt eine zweite Haltestellung des Halteelements 40e. Das Halteelement 40e ist in der zweiten Haltestellung von dem hinteren Ende 46e aus über eine Tischoberfläche 28e des Tischelements 14e des Tischmoduls 10e geklappt. Dabei ist das Halteelement 40e in einem Raum zwischen dem Tischelement 14e und der Rückenlehne 102e angeordnet, sodass die Tischoberfläche 28e nicht von dem Halteelement 40e verkleinert wird. Das PED 38e liegt dabei mit einem unteren Ende auf dem ersten Abstützelement 118e auf. Das PED 38e liegt in der ersten Haltestellung mit seinem unteren Ende auf dem Tischelement 14e auf. Dabei sind in der ersten Haltestellung des Halteelements 40e noch 95% der Tischoberfläche 28e, die das erste Tischelement 14e in der Verstaustellung des Halteelements 40e bereitstellt, zum Abstellen von Gegenständen nutzbar. In einer Verstaustellung ist das Halteelement 40e des PED-Halters 36e wie in dem vierten Ausführungsbeispiel der Figuren 10 und 11 an das Tischmodul 10e angeklappt.

**Bezugszeichen**
- 10: Tischmodul
- 12: Lagereinheit
- 14: Tischelement
- 16: Tischelement
- 18: Lagereinheit
- 20: erste Seite
- 22: zweite Seite
- 24: erste Seite
- 26: zweite Seite
- 28: Tischoberfläche
- 30: Tischoberfläche
- 32: Sperrelement
- 34: Sperrelement
- 36: PED-Halter
- 38: PED
- 40: Halteelement
- 42: Schwenklagereinheit
- 44: Durchgangsloch
- 46: hinteres Ende
- 48: Lagerelement
- 50: Lagerelement
- 52: Aufnahme
- 54: Aufnahme
- 56: Schwenkachse
- 58: Rastmechanismus
- 60: Rastscheibe
- 62: Rastscheibe
- 64: Gegenelement
- 66: Gegenelement
- 68: Federelement
- 70: Federelement
- 72: Wellenkontur
- 74: Wellenkontur
- 76: Befestigungselement
- 78: Vertiefung
- 80: Anschlag
- 82: Abstützelement
- 84: Sicherungsvorrichtung
- 86: Halteelement
- 88: Halteelement
- 90: Koppelelement
- 92: Koppelelement
- 94: Abstützelement
- 96: Durchgangsausnehmung
- 98: Abstützfläche
- 100: Klemmelement
- 102: Rückenlehne
- 104: Ende
- 106: Abstützelement
- 108: Flugzeugsitz
- 110: Sitzboden
- 112: Sitzreihe
- 114: Armlehne
- 116: Schwenklagerung
- 118: Abstützelement
- 120: Rückseite
- 122: Griffstelle
- 124: Piktogramm

## Patentansprüche

1. Flugzeugsitzvorrichtung mit einem Tischmodul (10a; 10b; 10c; 10d; 10e) und mit einem PED-Halter (36a; 36b; 36c; 36d: 36e), der dazu vorgesehen ist, ein mobiles elektronisches Gerät (38a; 38b; 38c; 38d; 38e) in einer Bedienposition auf dem Tischmodul (10a; 10b; 10c; 10d; 10e) zu lagern, wobei der PED-Halter (36a; 36b; 36c; 36d; 36e) wenigstens ein Halteelement (40a; 40b; 40c; 40d; 40e) aufweist, das schwenkbar mit dem Tischmodul (10a; 10b; 10c; 10d; 10e) verbunden ist, wobei der PED-Halter (36a; 36b; 36c; 36d; 36e) eine Schwenklagereinheit (42a; 42d; 42e) umfasst, die dazu vorgesehen ist, das Halteelement (40a; 40b; 40c; 40d; 40d; 40e) um mehr als 180 Grad zu verschwenken, **dadurch gekennzeichnet, dass** das Halteelement (40a; 40b; 40c; 40d; 40e) dazu vorgesehen ist, in einer ersten Haltestellung, ausgehend von seiner Verstaustellung zu einem ersten Tischelement (14a; 14b; 14c; 14d; 14e) des Tischmoduls (10a; 10b; 10c; 10d; 10e), um einen Winkel zwischen 5 und 180 Grad und in einer zweiten Haltestellung, ausgehend von seiner Verstaustellung zu dem ersten Tischelement (14a; 14b; 14c; 14d; 14e) des Tischmoduls (10a; 10b; 10c; 10d; 10e), um einen Winkel zwischen 181 und 360 Grad verschwenkt zu werden.

2. Flugzeugsitzvorrichtung nach einem der vorhergehenden Ansprüche, **dadurch gekennzeichnet, dass** das Tischmodul (10a; 10b; 10c) wenigstens ein schwenkbar zu dem ersten Tischelement (14a; 14b; 14c) gelagertes, zweites Tischelement (16a; 16b; 16c) aufweist, wobei in einem ersten Betriebszustand das erste Tischelement (14a; 14b; 14c) allein eine erste Tischoberfläche (28a) ausbildet und in einem zweiten Betriebszustand die beiden Tischelemente (14a, 16a; 14b, 16b; 14c, 16c) zusammen eine zweite Tischoberfläche (30a) ausbilden.

3. Flugzeugsitzvorrichtung nach Anspruch 2, **dadurch gekennzeichnet, dass** das Halteelement (40a; 40b; 40c) in zumindest einer ersten Haltestellung dazu vorgesehen ist, in dem ersten Betriebszustand des Tischmoduls (10a; 10b; 10c) eine Halterung für ein mobiles elektronisches Gerät (38a; 38b; 38c) bereitzustellen und in zumindest einer zweiten Haltestellung in dem zweiten Betriebszustand des Tischmoduls (10a; 10b; 10c) eine Halterung für ein mobiles elektronisches Gerät (38a; 38b; 38c) bereitzustellen.

4. Flugzeugsitzvorrichtung nach einem der vorhergehenden Ansprüche, **dadurch gekennzeichnet, dass** die Schwenklagereinheit (42a; 42d; 42e) eine Schwenkachse (56a) ausbildet, die in Querrichtung ausgerichtet ist, die orthogonal auf einer Sitzrichtung eines zugeordneten Flugzeugsitzes verläuft.

5. Flugzeugsitzvorrichtung zumindest nach Anspruch 2, **dadurch gekennzeichnet, dass** das erste Tischelement (14a) ein hinteres Ende (46a) aufweist, an dem die Schwenklagereinheit (42a) angebracht ist.

6. Flugzeugsitzvorrichtung nach einem der vorhergehenden Ansprüche, **dadurch gekennzeichnet, dass** die Schwenklagereinheit (42a; 42d; 42e) einen Rastmechanismus (58a) aufweist, der dazu vorgesehen ist, das Halteelement (40a; 40d; 40c) in verschiedenen Stellungen zu arretieren.

7. Flugzeugsitzvorrichtung zumindest nach Anspruch 2, **dadurch gekennzeichnet, dass** das erste Tischelement (14a) eine Vertiefung (78a) ausbildet, in der das Halteelement (40a) des PED-Halters (36a) in einer Verstaustellung angeordnet ist.

8. Flugzeugsitzvorrichtung nach Anspruch 7, **dadurch gekennzeichnet, dass** die Vertiefung (78a) in eine erste Seite (20a) des ersten Tischelements (14a) eingebracht ist.

9. Flugzeugsitzvorrichtung nach Anspruch 7 oder 8, **dadurch gekennzeichnet, dass** die Vertiefung (78a) einen Anschlag (80a) ausbildet, der in der zumindest einen ersten Haltestellung dazu vorgesehen ist, eine Abstützfläche für das mobile elektronische Gerät (38a) bereitzustellen.

10. Flugzeugsitzvorrichtung zumindest nach Anspruch 2, **dadurch gekennzeichnet, dass** der PED-Halter (36a) wenigstens ein Abstützelement (82a) aufweist, das zumindest in einer zweiten Haltestellung dazu vorgesehen ist, eine Abstützfläche für das mobile elektronische Gerät (38a) bereitzustellen und dazu auf der zweiten Seite (22a) des ersten Tischelements (14a) angeordnet ist.

11. Flugzeugsitzvorrichtung zumindest nach Anspruch 2, **dadurch gekennzeichnet, dass** das erste Tischelement (14a) in dem ersten Betriebszustand auf dem zweiten Tischelement (16a) angeordnet ist und mit einer ersten Seite (20a) die Tischoberfläche (28a) ausbildet.

12. Flugzeugsitzvorrichtung zumindest nach Anspruch 2, **dadurch gekennzeichnet, dass** das erste Tischelement (14a) in dem zweiten Betriebszustand neben das zweite Tischelement (16a) geklappt ist und mit seiner zweiten Seite (22a) zusammen mit einer ersten Seite (24a) des zweiten Tischelements (16a) die zweite Tischoberfläche (30a) ausbildet.

13. Flugzeugsitzvorrichtung nach einem der Ansprüche 1, 4 oder 6,
**dadurch gekennzeichnet, dass** das Tischmodul (10d; 10e) lediglich ein erstes Tischelement (14d; 14e) aufweist, welches ein hinteres Ende (46d; 46e) umfasst, an dem die Schwenklagereinheit (42a) angebracht ist.

## Claims

1. Aircraft seat device, with a table module (10a; 10b; 10c; 10d; 10e) and with a PED holder (36a; 36b; 36c; 36d; 36e) which is configured to support a mobile electronic device (38a; 38b; 38c; 38d; 38e) in an operable position on the table module (10a, 10b; 10c; 10d; 10e),
the PED holder (36a; 36b; 36c; 36d; 36e) comprising at least one holding element (40a; 40b; 40c; 40d; 40e), which is pivotably connected with the table module (10a; 10b; 10c; 10d; 10e),
the PED holder (36a; 36b; 36c; 36d; 36e) comprising a pivot bearing unit (42a; 42d; 42e), which is configured for pivoting the holding element (40a; 40b; 40c; 40d; 40e) by more than 180 degrees,
**characterised in that** the holding element (40a; 40b; 40c; 40d; 40e) is configured in a first holding position to be pivoted, starting from its stowage position, with respect to a first table element (14a; 14b; 14c; 14d; 14e) of the table module (10a; 10b, 10c; 10d; 10e), by an angle between 5 degrees and 180 degrees and,
in a second holding position to be pivoted, starting from its stowage position, with respect to the first table element (14a; 14b; 14c; 14d; 14e) of the table module (10a; 10b; 10c; 10d; 10e), by an angle between 181 degrees and 360 degrees.

2. Aircraft seat device according to one of the preceding claims,
**characterised in that** the table module (10a; 10b; 10c) comprises at least one second table element (16a; 16b; 16c), which is supported pivotably with respect to the first table element (14a; 14b; 14c),
wherein in a first operating state the first table element (14a; 14b; 14c) alone forms a first table surface (28a) and
in a second operating state the two table elements (14a, 16a; 14b, 16b; 14c, 16c) together form a second table surface (30a).

3. Aircraft seat device according to claim 2,
**characterised in that** the holding element (40a; 40b; 40c) is configured, in at least one first holding position, in the first operating state of the table module (10a; 10b; 10c), to provide a holder for a mobile electronic device (38a; 38b; 38c) and, in at least one second holding position, in the second operating state of the table module (10a; 10b; 10c), to provide a holder for a mobile electronic device (38a; 38b; 38c).

4. Aircraft seat device according to one of the preceding claims,
**characterised in that** the pivot bearing unit (42a; 42d; 42e) forms a pivot axis (56a), which is oriented in a transverse direction extending orthogonally to a sitting direction of an allocated aircraft seat.

5. Aircraft seat device at least according to claim 2,
**characterised in that** the first table element (14a) has a rear end (46a) which the pivot bearing unit (42a) is mounted on.

6. Aircraft seat device according to one of the preceding claims,
**characterised in that** the pivot bearing unit (42a; 42d; 42e) comprises a latch mechanism (58a) that is configured for a blocking of the holding element (40a; 40d; 40c) in different positions.

7. Aircraft seat device at least according to claim 2,
**characterised in that** the first table element (14a) forms a deepening (78a), in which the holding element (40a) of the PED holder (36a) is arranged in a stowage position.

8. Aircraft seat device according to claim 7,
**characterised in that,** the deepening (78a) is introduced in a first side (20a) of the first table element (14a).

9. Aircraft seat device according to claim 7 or 8,
**characterised in that** the deepening (78a) forms an abutment (80a) that is configured, in the at least one first holding position, to provide a support surface for the mobile electronic device (38a).

10. Aircraft seat device at least according to claim 2,
**characterised in that** the PED holder (36a) comprises at least one support element (82a) which is configured, at least in a second holding position, to provide a support surface for the mobile electronic device (38a) and which is for this purpose arranged on the second side (22a) of the first table element (14a).

11. Aircraft seat device at least according to claim 2,
**characterised in that** the first table element (14a) is in the first operating state arranged on the second table element (16a) and forms with a first side (20a) the table surface (28a).

12. Aircraft seat device at least according to claim 2,
**characterised in that** the first table element (14a) is in the second operating state deployed side by side with the second table element (16a) and forms with its second side (22a) together with a first side (24a) of the second table element (16a) the second table surface (30a).

13. Aircraft seat device according to claim 1,
**characterised in that** the table module (10d; 10e) comprises merely a first table element (14d; 14e), which has a rear end (46d; 46e) which the pivot bearing unit (42a) is mounted on.

## Revendications

1. Dispositif de siège d'avion avec un module de table (10a ; 10b ; 10c ; 10d ; 10e) et avec un porteur-PED (36a ; 36b ; 36c ; 36d ; 36e) configuré à supporter un appareil électronique mobile (38a ; 38b ; 38c ; 38d ; 38e) sur le module de table (10a ; 10b ; 10c ; 10d ; 10e) dans une position opérative,
le porteur-PED (36a ; 36b ; 36c ; 36d ; 36e) comportant au moins un élément de retenue (40a ; 40b ; 40c ; 40d ; 40e) qui est pivotablement raccordé avec le module de table (10a ; 10b ; 10c ; 10d ; 10e),
le porteur-PED (36a ; 36b , 36c ; 36d ; 36e) comportant une unité de palier pivotant (42a ; 42d ; 42e) qui est configurée à pivoter l'élément de retenue (40a ; 40b ; 40c ; 40d ; 40d ; 40e) par plus de 180 degrés,
**caractérisé en ce que** l'élément de retenue (40a ; 40b ; 40c ; 40d ; 40e) est configuré, dans une première position de retenue, à être pivoté, sortant de sa position de rangement, par rapport à un premier élément de table (14a ; 14b ; 14c ; 14d ; 14e) du module de table (10a ; 10b ; 10c ; 10d ; 10e) par un angle entre 5 degrés et 180 degrés et, dans une deuxième position de retenue, à être pivoté, sortant de sa position de rangement, par rapport au premier élément de table (14a ; 14b ; 14c ; 14d ; 14e) du module de table (10a ; 10b ; 10c ; 10d ; 10e) par un angle entre 181 degrés et 360 degrés.

2. Dispositif de siège d'avion selon l'une quelconque des revendications précédentes,
**caractérisé en ce que** le module de table (10a ; 10b ; 10c) comporte au moins un deuxième élément de table (16a ; 16b ; 16c) qui est supporté pivotablement par rapport au premier élément de table (14a ; 14b ; 14c),
où dans un premier état opératif le premier élément de table (14a ; 14b ; 14c) seul forme une première superficie de table (28a) et
où dans un deuxième état opératif les deux éléments de table (14a, 16a ; 14b, 16b ; 14c, 16c) ensemble forment une deuxième superficie de table (30a).

3. Dispositif de siège d'avion selon la revendication 2,
**caractérisé en ce que** l'élément de retenue (40a ; 40b, 40c) est prévu, dans au moins une première position de retenue, dans le premier état opératif du module de table (10a ; 10b ; 10c), pour fournir un rétenteur pour un appareil électronique mobile (38a ; 38b ; 38c) et, dans au moins une deuxième position de retenue, dans le deuxième état opératif du module de table (10a ; 10b, 10c), pour fournir un rétenteur pour un appareil électronique mobile (38a ; 38b ; 38c).

4. Dispositif de siège d'avion selon l'une quelconque des revendications précédentes,
**caractérisé en ce que** l'unité de palier pivotant (42a ; 42d ; 42e) forme un axe pivotant (56a) qui est orienté dans une direction transversale s'étendant orthogonalement sur une direction d'assise d'un siège d'avion alloué.

5. Dispositif de siège d'avion au moins selon la revendication 2,
**caractérisé en ce que** le premier élément de table (14a) présente une extrémité arrière (46a), sur lequel l'unité de palier pivotant (42a) est montée.

6. Dispositif de siège d'avion selon l'une quelconque des revendications précédentes,
**caractérisé en ce que** l'unité de palier pivotant (42a ; 42d ; 42e) comporte un mécanisme d'encliquetage (58a) configuré pour bloquer l'élément de retenue (40a ; 40d ; 40c) dans des positions différentes.

7. Dispositif de siège d'avion au moins selon la revendication 2,
**caractérisé en ce que** le premier élément de table (14a) forme une concavité (78a), dans laquelle l'élément de retenue (40a) du porteur-PED (36a) est disposé dans une position de rangement.

8. Dispositif de siège d'avion selon la revendication 7,
**caractérisé en ce que** la concavité (78a) est introduite dans un premier côté (20a) du premier élément de table (14a).

9. Dispositif de siège d'avion selon l'une quelconque des revendications 7 ou 8,
**caractérisé en ce que** la concavité (78a) forme une butée (80a) qui est configurée, dans l'au moins une première position de retenue, pour fournir une surface d'appui pour l'appareil électronique mobile (38a).

10. Dispositif de siège d'avion au moins selon la revendication 2,
**caractérisé en ce que** le porteur-PED (36a) comporte au moins un élément d'appui (82a) qui est configuré, au moins dans une deuxième position de retenue, pour fournir une surface d'appui pour l'appareil électronique mobile (38a) et qui est à cette fin disposé sur le deuxième côté (22a) du premier élément de table (14a).

11. Dispositif de siège d'avion au moins selon la revendication 2,
**caractérisé en ce que,** dans le premier état opératif, le premier élément de table (14a) est disposé au-dessus du deuxième élément de table (16a), formant avec un premier côté (20a) la superficie de table (28a).

12. Dispositif de siège d'avion au moins selon la revendication 2,
**caractérisé en ce que,** dans le deuxième état opératif, le premier élément de table (14a) est déployé à côté du deuxième élément de table (16a), formant avec son deuxième côté (22a), ensemble avec un premier côté (24a) du deuxième élément de table (16a), la deuxième superficie de table (30a).

13. Dispositif de siège d'avion selon la revendication 1,
**caractérisé en ce que** le module de table (10d ; 10e) comporte seulement un premier élément de table (14d ; 14e), qui présente une extrémité arrière (46d ; 46e) sur laquelle l'unité de support pivotant (42a) est montée.
